# EUROPÄISCHE PATENTSCHRIFT

(11) **EP 1 024 167 B1**
(45) Veröffentlichungstag und Bekanntmachung des Hinweises auf die Patenterteilung: **21.12.2005**
(21) Anmeldenummer: 00100470.4
(22) Anmeldetag: 11.01.2000
(51) Int. Cl.: C08K 5/5313, C08K 3/32, C08K 3/34, C08K 5/19, C08K 5/3472, C08K 5/3477

(54) **Flammschutzmittel-Kombination für thermoplastische Polymere I**
Combination of flame retardants for thermoplastic polymers
Combinaison d'ignifuges pour polymères thermoplastiques

(30) Priorität: 30.01.1999 DE 19903708; 15.12.1999 DE 19960671
(43) Veröffentlichungstag der Anmeldung: 02.08.2000
(73) Patentinhaber: Clariant GmbH, 65929 Frankfurt am Main (DE)
(72) Erfinder: Schlosser, Elke, Dipl.-Ing., 86163 Augsburg (DE); Nass, Bernd, Dipl.-Ing., 86152 Augsburg (DE); Wanzke, Wolfgang, Dr., 86405 Meitingen (DE)

(56) Entgegenhaltungen:
- DE-A- 19 614 424
- DE-A- 19 708 726

## Beschreibung

Die Erfindung betrifft eine Flammschutzmittel-Kombination für thermoplastische Polymere.

Für thermoplastische Polymere haben sich die Salze von Phosphinsäuren (Phosphinate) als wirksame flammhemmende Zusätze erwiesen, dies gilt sowohl für die Alkalimetallsalze (DE-A-2 252 258) als auch für die Salze anderer Metalle (DE-A-2 447 727).

Calcium- und Aluminiumphosphinate sind in Polyestern als besonders wirksam beschrieben worden und beeinträchtigen die Materialeigenschaften der Polymerformmassen weniger als die Alkalimetallsalze (EP-A-0 699 708).

Darüberhinaus wurden synergistische Kombinationen von den genannten Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Die DE-A 197 08 726 beschreibt bereits flammgeschützte Polymerformmassen die Salzgemische aus Phosphinsäuresalzen und Aluminiumsalzen enthalten und die zusätzlich noch Füll- und Verstärkungsstoffe wie Glasfasern und Kreide enthalten können. Es ist jedoch bekannt, dass Füllstoffe wie Kreide ein Flammschutzsystem stören können, womit eine nachteilige Beeinträchtigung der Flammschutzwirkung verbunden ist.

Es wurde nun überraschend gefunden, daß die Flammschutzwirkung der verschiedenen Phosphinate in thermoplastischen Polymeren auch durch Zusätze von kleinen Mengen anorganischer bzw. mineralischer Verbindungen, die keinen Stickstoff enthalten, deutlich verbessert werden kann.

Darüberhinaus wurde gefunden, daß die genannten Zusätze auch die Flammschutzwirkung von Phosphinaten in Kombination mit stickstoffhaltigen Synergisten verbessern können.

Gegenstand der Erfindung ist somit eine Flammschutzmittel-Kombination für thermoplastische Polymere, die als Komponente A ein Phosphinsäuresalz der Formel (I) und/oder ein Diphosphinsäuresalz der Formel (II) und/oder deren Polymere enthält, 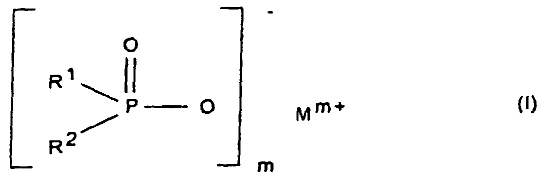 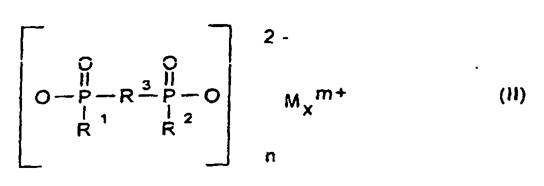 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Calcium-, Aluminium- und/oder Zink-Ionen;
- m: 2 oder 3;
- n: 1 oder 3;
- x: 1 oder 2
bedeuten,
und als Komponente B eine synthetische anorganische Verbindung und/oder ein mineralisches Produkt enthält, ausgewählt aus Salzen und Estern der Orthokieselsäure und deren Kondensationsprodukten, Silikate, Zeolithe und Kieselsäuren, Keramikpulver, Zinkborat, Zinkstannat, Zinkhydroxystannat, Zinkphosphat, Zinksulfid, Zinkoxid, Magnesiumhydroxid, Hydrotalcite, Magnesiumcarbonat, Calcium-Magnesiumcarbonat, oder roter Phosphor, wobei unabhängig voneinander die Komponente A in einer Konzentration von 1 bis 30 Gew.-% und die Komponente B in einer Konzentration von 0,1 bis 10 Gew.-%, jeweils bezogen auf die Kunststoff-Formmasse, eingesetzt werden.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

Bevorzugt handelt es sich bei rotem Phosphor um elementaren roten Phosphor oder um Zubereitungen, in denen der Phosphor oberflächlich mit niedermolekularen, flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet ist.

Bevorzugt enthält die erfindungsgemäße Flammschutzmittel-Kombination als weitere Komponente C Stickstoffverbindungen.

Bevorzugt handelt es sich bei den Stickstoffverbindungen um solche der Formeln (III) bis (VIII) oder Gemische davon 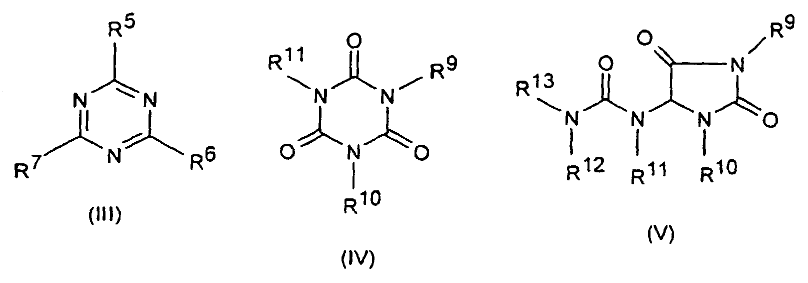 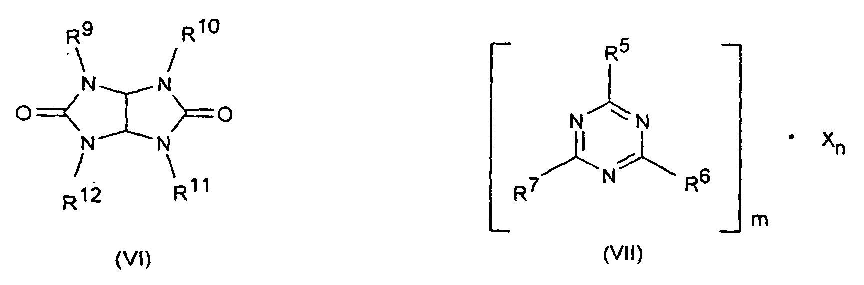 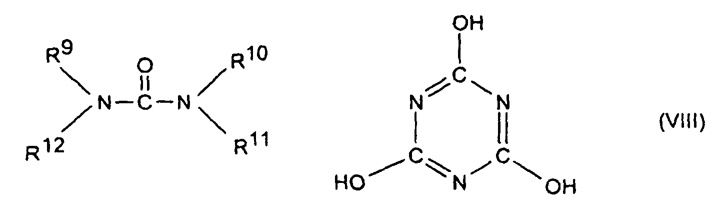 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R³ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren oder um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei der Komponente C um Benzoguanamin, Tris(hydroxyethyl)isocyanurat, Allantoin, Glycouril, Melamin, Melamincyanurat, Melaminphosphat, Dimelaminphosphat und/oder Melaminpyrophosphat.

Die Erfindung betrifft auch die Verwendung der erfindungsgemäßen Flammschutzmittel-Kombination zur flammfesten Ausrüstung von thermoplastischen Polymeren. Unter thermoplastischen Polymeren werden laut Hans Domininghaus in "Die Kunststoffe und ihre Eigenschaften", 5. Auflage (1998), S. 14, Polymere verstanden, deren Molekülketten keine oder auch mehr oder weniger lange und in der Anzahl unterschiedliche Seitenverzweigungen aufweisen, die in der Wärme erweichen und nahezu beliebig formbar sind.

Bevorzugt handelt es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol). Polystyrol-HI ist ein Polystyrol mit erhöhter Schlagzähigkeit.

Besonders bevorzugte thermoplastische Polymere sind Polyamide, Polyester und ABS.

Thermoplastische Polymere, die die erfindungsgemäßen Flammschutzmittel-Kombinationen und gegebenenfalls Füll- und Verstärkungsstoffe und/oder andere Zusätze, wie unten definiert, enthalten, werden im folgenden als Kunststoff-Formmassen bezeichnet.

Erfindungsgemäß werden für die genannte Verwendung unabhängig voneinander die Komponente A in einer Konzentration von 1 bis 30 Gew.-% und die Komponente B in einer Konzentration von 0,1 bis 10 Gew.-%, jeweils bezogen auf die Kunststoff-Formmasse, eingesetzt.

Die Erfindung betrifft schließlich auch eine flammfest ausgerüstete Kunststoff-Formmasse, enthaltend die erfindungsgemäße Flammschutzmittel-Kombination.

Bevorzugt handelt es sich bei dem Polymeren der flammfest ausgerüsteten Kunststoff-Formmasse um Polyamid, Polyester und ABS.

Bei der bereits weiter vorne genannten Komponente B handelt es sich um eine synthetische anorganische Verbindung und/oder um ein mineralisches Produkt aus den nachfolgend genannten Gruppen:

Sauerstoffverbindungen des Siliciums, wie Salze und Ester der Orthokieselsäure und deren Kondensationsprodukte (Silikate). Eine Übersicht über geeignete Silikate wird beispielsweise in Riedel, Anorganische Chemie, 2.Aufl., S. 490 - 497, Walter de Gruyter, Berlin-New York 1990 gegeben. Von besonderem Interesse sind dabei Phyllosilikate (Blatt-Silikate, Schichtsilikate) wie etwa Talk, Kaolinit und Glimmer und die Gruppe der Bentonite und Montmorinollite, sowie Tektosilikate (Gerüstsilikate) wie z.B. die Gruppe der Zeolithe. Daneben kann auch Siliciumdioxid in Form von hochdisperser Kieselsäure eingesetzt werden.

Die Kieselsäure kann dabei nach einem pyrogenen oder nach einem naßchemischen Verfahren hergestellt sein. Die genannten Silikate bzw. Kieselsäuren können zur Erzielung bestimmter Oberflächeneigenschaften gegebenenfalls mit organischen Modifizierungsmitteln ausgerüstet sein.

Ebenfalls als Komponente B eingesetzt werden können Glas-, Glas-Keramik- und Keramik-Pulver unterschiedlicher Zusammensetzung, wie sie z. B. in "Ullmann's Encyclopedia of Industrial Chemistry", 5^{th} Edition, Vol. A 12 (1989), S. 372-387 (Glas) bzw. S. 443-448 (Glas-Keramik) beschrieben sind. Entsprechende Keramische Materialien sind in Vol. 6 (1986) auf S. 12-18 (Commercial Ceramic Clays) beschrieben. Es können sowohl Gläser und/oder Keramiken mit definiertem Schmelzpunkt verwendet werden, als auch Mischungen von Produkten mit einem breiten Schmelzbereich, etwa Keramik-Fritten, wie sie zur Herstellung von Glasuren eingesetzt werden. Solche Fritten oder Mischungen mehrerer Fritten können auch zusätzlich Glas-, Basalt- oder keramische Fasern enthalten. Mischungen dieser Art sind z. B. in der EP 0 287 293 B1 beschrieben.

Ebenfalls als Komponente B eingesetzt werden können Magnesiumverbindungen, wie Magnesiumhydroxid sowie Hydrotalcite der allgemeinen Formel

Mg₍₁₋ₐ₎Alₐ(OH)₂ A_{a/2} · pH₂O,

wobei
- A: für die Anionen SO₄²⁻ oder CO₃²⁻ steht,
- a: größer 0 und kleiner/gleich 0,5 ist und
- p: die Anzahl der Wassermoleküle des Hydrotalcits bedeuten und einen Wert zwischen 0 und 1 darstellt.
Hydrotalcite, bei denen A das Anion CO₃²⁻ repräsentiert, und 0,2 ≤ a ≤ 0,4 gilt, sind bevorzugt.
Die Hydrotalcite können sowohl natürliche Hydrotalcite, die gegebenfalls durch entsprechende chemische Behandlung modifiziert sein können, als auch synthetisch hergestellte Produkte sein.

Ebenfalls als Komponente B eingesetzt werden können Metallcarbonate von Metallen der zweiten Hauptgruppe des Periodensystems und deren Mischungen.

Geeignet sind Magnesium-Calcium-Carbonate (b₁) der allgemeinen Formel

Mg_{b}Ca_{c}(CO₃)_{b+c} · q H₂O,

wobei b und c Zahlen von 1 bis 5 bedeuten und b/c ≥ 1 gilt und q ≥ 0 ist,
sowie basische Magnesium-Carbonate (b₂) der allgemeinen Formel

Mg_{d}(CO₃)ₑ(OH)_{2d-2e}· r H₂O,

wobei
d eine Zahl von 1 bis 6, e eine Zahl größer als 0 und kleiner als 6 bedeutet und d/e >1gilt und r ≥ 0 ist.
Besonders geeignet sind Mischungen aus b₁ und b₂, wobei das Mengenverhältnis von b₁ : b₂ im Bereich von 1:1 bis 3:1 liegt.
Die Magnesium-Calcium-Carbonate b₁ und basischen Magnesium-Carbonate b₂ können sowohl in wasserhaltiger als auch wasserfreier Form und mit oder ohne Oberflächenbehandlung eingesetzt werden. Zu diesen Verbindungstypen gehören die natürlich vorkommenden Mineralien wie Huntit (b₁) und Hydromagnesit (b₂) und deren Mischungen.

Ebenfalls als Komponente B eingesetzt werden können Zinkverbindungen wie Zinkoxid, -stannat, -hydroxystannat, -phosphate und -sulfide sowie Zinkborate der allgemeinen Formel f ZuO · g B₂O₃ · h H₂O, wobei f, g und h Werte zischen 0 und 14 bedeuten.

Die erfindungsgemäßen Flammschutzmittel-Kombinationen können gegebenenfalls als Komponente C eine Stickstoffverbindung der Formel (III) bis (VIII) oder ein Gemisch der durch die Formeln bezeichneten Verbindungen, wie sie in der DE-A-197 37 727 beschrieben sind, und auf die hier ausdrücklich Bezug genommen wird, enthalten.

Zusätzlich zu den oben genannten können als Komponente C oligomere Ester des Tris(hydroxyethyl)isocyanurats mit aromatischen Polycarbonsäuren, wie sie in EP-A 584 567 beschrieben sind, und stickstoffhaltige Phosphate der Formeln (NH₄)_{y} H_{3-y} PO₄ bzw. (NH₄ PO₃)_{z}, wobei y Zahlenwerte von 1 bis 3 annehmen kann und z eine beliebig große Zahl ist (etwa 1 bis 10.000), typischerweise auch als Durchschnittswert einer Kettenlängenverteilung dargestellt, eingesetzt werden.

Geeignete Polymere, in denen die erfindungsgemäße Flammschutzmittel-Kombination wirksam eingesetzt werden kann, sind auch in der internationalen Patentanmeldung PCT/WO 97/01664 auf den Seiten 6 bis 9 beschrieben, worauf hier ausdrücklich Bezug genommen wird.

Im folgenden umfaßt der Begriff "Phosphinsäuresalz" Salze der Phosphin- und Diphosphinsäuren und deren Polymere.

Die Phosphinsäuresalze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden, wie sie beispielsweise in der EP-A-699 708 näher beschrieben sind. Die Phosphinsäuren werden dabei beispielsweise in wäßriger Lösung mit Metallcarbonaten, Metallhydroxiden oder Metalloxiden umgesetzt.

Die Menge des den Polymeren zuzusetzenden Phosphinsäuresalzes kann innerhalb weiter Grenzen variieren. Im allgemeinen verwendet man 1 bis 30 Gew.-%, bezogen auf die Kunststoff-Formmasse. Die optimale Menge hängt von der Natur des Polymeren, der Art der Komponenten B und gegebenenfalls C und vom Typ des eingesetzten Phosphinsäuresalzes selbst ab. Bevorzugt sind 3 bis 25, insbesondere 5 bis 20 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die optimale Menge der den Polymeren zuzusetzenden erfindungsgemäßen anorganischen Verbindungen (Komponente B) hängt von der Natur des Polymeren, der Art des eingesetzten Phosphinsäuresalzes (Komponente A), der gegebenenfalls eingesetzten stickstoffhaltigen Verbindung (Komponente C) sowie vom Typ der anorganischen Verbindung selbst ab. Bevorzugt sind 0,3 bis 7, insbesondere 0,5 bis 5 Gew.-%. Es ist auch möglich, eine Kombination der genannten anorganischen Verbindungen zuzusetzen.

Die Menge der den Polymeren zuzusetzenden Stickstoffverbindung (Komponente C) kann innerhalb weiter Grenzen variieren. Im allgemeinen verwendet man 1 bis 30 Gew.-% bezogen auf die Kunststoff-Formmasse. Die optimale Menge hängt von der Natur des Polymeren, der Art des eingesetzten Phosphinsäuresalzes (Komponente A), der Art der eingesetzten anorganischen Verbindung (Komponente B) sowie vom Typ der Stickstoffverbindung selbst ab. Bevorzugt sind 3 bis 20, insbesondere 5 bis 15 Gew.-%.

Die flammhemmenden Komponenten A, B und gegebenenfalls C können in thermoplastische Polymere eingearbeitet werden, indem z. B. alle Bestandteile als Pulver und/oder Granulat in einem Mischer vorgemischt und anschließend in einem Compoundieraggregat (z. B. einem Doppel-schneckenextruder) in der Polymerschmelze homogenisiert werden. Die Schmelze wird üblicherweise als Strang abgezogen, gekühlt und granuliert. Die Komponenten A, B (und gegebenenfalls C) können auch separat über eine Dosieranlage direkt in das Compoundieraggregat eingebracht werden.

Es ist ebenso möglich, die flammhemmenden Zusätze A, B und C einem fertigen Polmergranulat bzw. -pulver beizumischen und die Mischung direkt auf einer Spritzgußmaschine zu Formteilen zu verarbeiten.

Bei Polyestern beispielsweise können die flammhemmenden Zusätze A, B und C auch bereits während der Polykondensation in die Polyestermasse gegeben werden.

Den Formmassen können neben der erfindungsgemäßen flammhemmenden Kombination aus A, B und gegebenenfalls C auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-584 567 angegeben.

Die flammwidrigen Kunststoff-Formmassen eignen sich zur Herstellung von Formkörpern, Filmen, Fäden und Fasern, z. B. durch Spritzgießen, Extrudieren oder Verpressen.

### Beispiele

### 1. Eingesetzte Komponenten

### Handelsübliche Polymere (Granulat):

| | |
|---|---|
| ABS | ®Novodur P2X (Fa. Bayer AG, D) enthält keine Füll- bzw. Verstärkungsstoffe. |
| Polyamid 6 (PA 6-GV) | ®Durethan BKV 30 (Fa. Bayer AG, D) enthält 30 % Glasfasern. |
| Polybutylenterephthalat (PBT-GV) | ®Celanex 2300 GV1/30 (Fa. Hoechst ®Celanese, USA) enthält 30 % Glasfasern. |

### Flammschutzmittelkomponenten (pulverförmig):

### Komponente A:

Aluminiumsalz der Diethylphosphinsäure, im folgenden als DEPAL bezeichnet. Zinksalz der Diethylphosphinsäure, im folgenden als DEPZn bezeichnet.

### Komponente B:

Aluminiumphosphat, Fa. Riedel de Haen, DE
CEEPREE® Microfine, Fa. Brunner Mond & Co. Ltd., UK
DHT-4A (Dihydrotalcit) Fa. Kyowa Chemical Industry, JP
DHT Exm 697-2 (Dihydrotalcit), Fa. Süd-Chemie AG, DE
Exolit® RP 605 (roter Phosphor), Fa. Clariant GmbH, DE
FIREBRAKE® ZB (Zinkborat), Fa. US Borax & Chemical Corporation, USA
Martinal OL 104 (Aluminiumhydroxid), Fa. Martinswerke, DE
Securoc® C 10N (Huntit/Hydromagnesit), Fa. Incemin AG, CH
Zinkoxid, Fa. MERCK, DE
Zinkstannat, Fa. Storey + Co., UK

### Komponente C:

Melamine Grade 003 (Melamin), Fa. DSM, NL
Melapur® MC (Melamincyanurat), Fa. DSM Melapur, NL
Melapur® MP (Melaminphosphat), Fa. DSM Melapur, NL

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat und evtl. Additiven vermischt und auf einem Doppelschnecken-Extruder (Typ Leistritz LSM 30/34) bei Temperaturen von 190 bis 225 °C (ABS) bzw. von 230 bis 260 °C (PBT-GV) bzw. von 240 bis 280 °C (PA 6-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 210 bis 240 °C (ABS) bzw. von 240 bis 270 °C (PBT-GV) bzw. von 260 bis 280 °C (PA 6-GV) zu Prüfkörpern verarbeitet und anhand des UL 94-Tests (Underwriter Laboratories) auf Flammwidrigkeit geprüft und klassifiziert. Die Brennbarkeit der Prüfkörper wurde durch Bestimmung des Sauerstoffindex (LOI nach ASTM D 2863-77) beurteilt.

Tabelle 1 zeigt Vergleichsbeispiele, in denen das Aluminium- bzw. Zinksalz der Diethylphosphinsäure (DEPAL bzw. DEPZn) als alleinige Flammschutzmittelkomponenten in glasfaserverstärktem PBT bzw. PA bzw. in ABS geprüft wurden.

In Tabelle 2 sind Vergleichsbeispiele mit stickstoffhaltigen Verbindungen (Komponente C) allein bzw. in Kombination mit in geringen Mengen wirksamen Verbindungen (Komponente B) in glasfaserverstärktem PBT bzw. in ABS widergegeben.

Tabelle 3 zeigt Vergleichsbeispiele, in denen das Aluminium- bzw. Zinksalz der Diethylphosphinsäure in Kombination mit stickstoffhaltigen Synergisten in glasfaserverstärktem PBT bzw. PA geprüft wurden, wie in der PCT/WO 97/01664 beschrieben.

Die Ergebnisse der Beispiele, in denen die Flammschutzmittel-Kombination gemäß der Erfindung eingesetzt wurden, sind in den Tabellen 4 bis 8 aufgelistet. Alle Mengen sind als Gew.-% angegeben und beziehen sich auf die Kunststoff-Formmasse einschließlich der Flammschutzmittel-Kombination.

Aus den Beispielen geht hervor, daß die erfindungsgemäßen Zusätze (Komponente B) in der Kombination mit Metallsalzen der Phosphinsäuren eine eindeutige Steigerung des Flammschutzeffekts bewirken, wenn sie in entsprechenden Mengen zugemischt werden. Auch synergistische Kombinationen aus den Metallsalzen der Phosphinsäuren und stickstoffhaltigen Verbindungen (Komponenten A+C) werden durch Zugabe einer gewissen Menge an Komponente B in ihrer flammhemmenden Wirksamkeit erheblich verbessert.

Die Flammschutzmittelmenge bezogen auf die Kunststoff-Formmasse, die nötig ist, um eine V-0, V-1 bzw. V-2 Einstufung zu erreichen, kann in der Kombination A+B gegenüber A allein bzw. A+B+C gegenüber A+C verringert werden. Zudem wird bei gleicher Flammschutzmittelmenge bezogen auf die Kunststoff-Formmasse eine Erhöhung des Sauerstoff-Index (LOI) in der erfindungsgemäßen Kombination gegenüber den Vergleichsbeispielen festgestellt.

**Tabelle 1:**

| Vergleichsbeispiele. Phosphinate in glasfaserverstärktem PBT, PA bzw. in ABS. | | | | |
|---|---|---|---|---|
| Polymer | DEPAL [%] | DEPZn [%] | Klasse nach UL 94 (1,6 mm) | LOI [% O₂] |
| PBT-GV | 15 | | V-1 | |
| PBT-GV | 17 | | V-1 | |
| PBT-GV | 20 | | V-0 | |
| PBT-GV | | 20 | V-2 | 29,0 |
| PBT-GV | | 25 | V-2 | 29,5 |
| PA 6-GV | 20 | | V-2 | 33,5 |
| PA 66-GV | 20 | | n.k.* | |
| PA 66-GV | 25 | | n.k.* | |
| PA 66-GV | 30 | | V-2 | 25,5 |
| ABS | 26 | | n.k* | 33,0 |
| ABS | 30 | | n.k* | 37,5 |

| | | | | |
|---|---|---|---|---|
| * n.k. = nicht klassifizierbar | | | | |

**Tabelle 2:**

| Vergleichsbeispiele. Stickstoffhaltige Verbindungen allein bzw. in Kombination mit in geringen Mengen wirksamen Verbindungen in glasfaserverstärktem PBT bzw. in ABS. | | | | | |
|---|---|---|---|---|---|
| Polymer | Melamincyanurat [%] | Melaminphosphat [%] | RP 605 | Klasse nach UL 94 (1,6 mm) | LOI [% O₂] |
| PBT-GV | 20 | | | n.k.* | 23,5 |
| PBT-GV | | 20 | | n.k.* | 25,0 |
| PBT-GV | | 15 | 3 | V-2 | 26,0 |
| ABS | 30 | | | n.k.* | 21,0 |
| ABS | | 30 | | n.k.* | 21,5 |

| | | | | | |
|---|---|---|---|---|---|
| * n.k. = nicht klassifizierbar | | | | | |

**Tabelle 3:**

| Vergleichsbeispiele. Phosphinate in Kombination mit stickstoffhaltigen Synergisten in glasfaserverstärktem PBT bzw. PA 6 bzw. PA 66. | | | | | | |
|---|---|---|---|---|---|---|
| Polymer | DEPAL [%] | DEPZn [%] | Melamincyanurat [%] | Melaminphosphat [%] | Klasse nach UL 94 (1,6 mm) | LOI [% O₂] |
| PBT-GV | 8 | | 8 | | V-2 | |
| PBT-GV | 10 | | 5 | | V-1 | 37,5 |
| PBT-GV | 10 | | 10 | | V-0 | 40,0 |
| PBT-GV | | 10 | 10 | | V-2 | 27,0 |
| PA 6-GV | 10 | | | 10 | V-1 | 35,0 |
| PA 66-GV | 20 | | 10 | | n.k.* | |

| | | | | | | |
|---|---|---|---|---|---|---|
| * n.k. = nicht klassifizierbar | | | | | | |

**Tabelle 4:**

| Erfindungsgemäß. Phosphinate in Kombination mit in geringen Mengen wirksamen Verbindungen in glasfaserverstärktem PBT. | | | | | | | | | | |
|---|---|---|---|---|---|---|---|---|---|---|
| DEPAL [%] | DEPZn | Ceepree [%] | DHT Exm [%] | Zinkborat [%] | Zinkstannat [%] | Al-hydroxid [%] | Al-phosphat [%] | RP 605 [%] | Klasse nach UL 94 (1,6 mm) | LOI [% O₂] |
| 15 | | 1 | | | | | | | V-0 | 38 |
| 15 | | | 1 | | | | | | V-0 | |
| 15 | | | | 2 | | | | | V-0 | |
| 15 | | | | | 1 | | | | V-0 | 38,5 |
| 12 | | | | | | 3 | | | V-0 | 39,0 |
| 14 | | | | | | | 1 | | V-1 | 42,0 |
| | 15 | | | | | | | 3 | V-0 | 33,5 |

**Tabelle 5:**

| Erfindungsgemäß. DEPAL in Kombination mit in geringen Mengen wirksamen Verbindungen in glasfaserverstärktem PA 6 bzw. PA 66. | | | | | | | | |
|---|---|---|---|---|---|---|---|---|
| Polymer | DEPAL [%] | Al-phosphat [%] | Ceepree [%] | Securoc C [%] | Zinkborat [%] | Zinkoxid [%] | Klasse nach UL 94 (1,6 mm) | LOI [% O₂] |
| PA 6-GV | 18 | 2 | | | | | V-0 | 40,0 |
| PA 6-GV | 18 | | 2 | | | | V-1 | 35,0 |
| PA 6-GV | 18 | | | 2 | | | V-1 | 45,0 |
| PA 6-GV | 18 | | | | 2 | | V-0 | 37,0 |
| PA 6-GV | 18 | | | | | 2 | V-0 | 37,0 |
| PA 66-GV | 22 | | 3 | | | | V-1 | 41,0 |
| PA 66-GV | 13,5 | | | | 1,5 | | V-1 | 36,5 |
| PA 66-GV | 16 | | | | 4 | | V-0 | |

**Tabelle 6:**

| Erfindungsgemäß. DEPAL in Kombination mit in geringen Mengen wirksamen Verbindungen in ABS. | | | | | | | |
|---|---|---|---|---|---|---|---|
| DEPAL [%] | DHT-4A [%] | RP 605 [%] | Zinkborat [%] | Zinkoxid [%] | Zinkstannat [%] | Klasse nach UL 94 (1,6 mm) | LOI [% O₂] |
| 25 | 1 | | | | | V-1 | 38,5 |
| 13 | | 2 | | | | V-1 | 41,0 |
| 25 | | | 1 | | | V-1 | 40,0 |
| 25 | | | | 1 | | V-1 | 35,0 |
| 25 | | | | | 1 | V-1 | 47,0 |

**Tabelle 7:**

| Erfindungsgemäß. DEPAL in Kombination mit stickstoffhaltigen Verbindungen und mit in geringen Mengen wirksamen Verbindungen in glasfaserverstärktem PBT. | | | | | | | | |
|---|---|---|---|---|---|---|---|---|
| DEPAL [%] | Melamincyanurat [%] | Melamin [%] | Al-phosphat [%] | Securoc C [%] | Zinkborat [%] | Zinkstannat [%] | Klasse nach UL 94 (1,6 mm) | LOI [% O₂] |
| 10 | 3 | | | 1 | | | V-0 | 36,0 |
| 10 | 4 | | | | 1 | | V-0 | 37,5 |
| 10 | 4 | | | | | 1 | V-0 | 35,0 |
| 9 | | 4 | 2 | | | | V-0 | 48,0 |

**Tabelle 8:**

| Erfindungsgemäß. DEPAL in Kombination mit stickstoffhaltigen Verbindungen und mit in geringen Mengen wirksamen Verbindungen in glasfaserverstärktem PA. | | | | | | | | | |
|---|---|---|---|---|---|---|---|---|---|
| Polymer | DEPAL [%] | Melamin [%] | Melamincyanurat [%] | Melaminphosphat [%] | Al-phosphat [%] | Ceepree [%] | Zinkborat [%] | Klasse nach UL 94 (1,6 mm) | LOI [% O₂] |
| PA 6-GV | 10 | 5 | | | 5 | | | V-0 | 34,0 |
| PA 6-GV | 9 | | | 9 | | 2 | | V-0 | 27,0 |
| PA 66-GV | 14 | 8,5 | | | | | 2,5 | V-0 | 36,0 |
| PA 66-GV | 13 | | 13 | | | 4 | | V-0 | 33,5 |

## Patentansprüche

1. Flammschutzmittel-Kombination für thermoplastische Polymere, die als Komponente A ein Phosphinsäuresalz der Formel (I) und/oder ein Diphosphinsäuresalz der Formel (II) und/oder deren Polymere enthält, 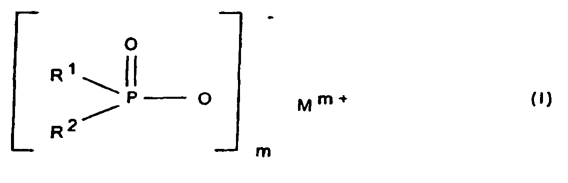 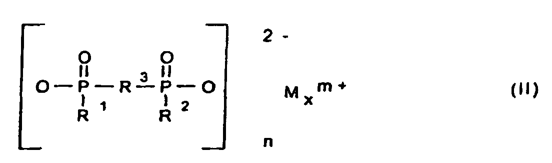 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Calcium-, Aluminium- und/oder Zink-Ionen;
m 2 oder 3;
n 1 oder 3;
x 1 oder 2
bedeuten,
und als Komponente B eine synthetische anorganische Verbindung und/oder ein mineralisches Produkt ausgewählt aus Salzen und Estern der Othokieselsäure und deren Kondensationsprodukten, Silikate, Zeolithe und Kieselsäuren, Keramikpulver, Zinkborat, Zinkstannat, Zinkhydroxystannat, Zinkphosphat, Zinksulfid, Zinkoxid, Magnesiumhydroxid, Hydrotalcite, Magnesiumcarbonat, Calcium-Magnesiumcarbonat oder roter Phosphor, wobei unabhängig voneinander die Komponente A in einer Konzentration von 1 bis 30 Gew.-% und die Komponente B in einer Konzentration von 0,1 bis 10 Gew.-%, jeweils bezogen auf die Kunststoff-Formmasse, eingesetzt werden.

2. Flammschutzmittel-Kombination nach Anspruch 1, **dadurch gekennzeichnet, dass** unabhängig voneinander die Komponente A in einer Konzentration von 3 bis 25 Gew.-% und die Komponente B in einer Konzentration von 0,3 bis 7 Gew.-%, jeweils bezogen auf die Kunststoff-Formmasse, eingesetzt werden.

3. Flammschutzmittel-Kombination nach Anspruch 1 oder 2, **dadurch gekennzeichnet, daß** R¹, R² gleich oder verschieden sind und C₁-C₆-Alkyl, linear oder verzweigt und/oder Phenyl bedeuten.

4. Flammschutzmittel-Kombination nach einem oder mehreren der Ansprüche 1 bis 3, **dadurch gekennzeichnet, daß** R¹, R² gleich oder verschieden sind und Methyl, Ethyl, n-Propyl, iso-Propyl, n-Butyl, tert.-Butyl, n-Pentyl und/oder Phenyl bedeuten.

5. Flammschutzmittel-Kombination nach einem oder mehreren der Ansprüche 1 bis 4, **dadurch gekennzeichnet, daß** R³ Methylen, Ethylen, n-Propylen, iso-Propylen, n-Butylen, tert.-Butylen, n-Pentylen, n-Octylen oder n-Dodecylen bedeutet.

6. Flammschutzmittel-Kombination nach einem oder mehreren der Ansprüche 1 bis 4, **dadurch gekennzeichnet, daß** R³ Phenylen oder Naphthylen bedeutet.

7. Flammschutzmittel-Kombination nach einem oder mehreren der Ansprüche 1 bis 4, **dadurch gekennzeichnet, daß** R³ Methyl-phenylen, Ethyl-phenylen, tert.-Butylphenylen, Methyl-naphtthylen, Ethyl-naphthylen oder tert.-Butylnaphthylen bedeutet.

8. Flammschutzmittel-Kombination nach einem oder mehreren der Ansprüche 1 bis 4, **dadurch gekennzeichnet, daß** R³ Phenyl-methylen, Phenyl-ethylen, Phenyl-propylen oder Phenyl-butylen bedeutet.

9. Flammschutzmittel-Kombination nach einem oder mehreren der Ansprüche 1 bis 8, **dadurch gekennzeichnet, daß** sie als weitere Komponente C Stickstoffverbindungen enthält.

10. Flammschutzmittel-Kombination nach Anspruch 9, **dadurch gekennzeichnet, daß** es sich bei den Stickstoffverbindungen um solche der Formeln (III) bis (VIII) oder Gemische davon 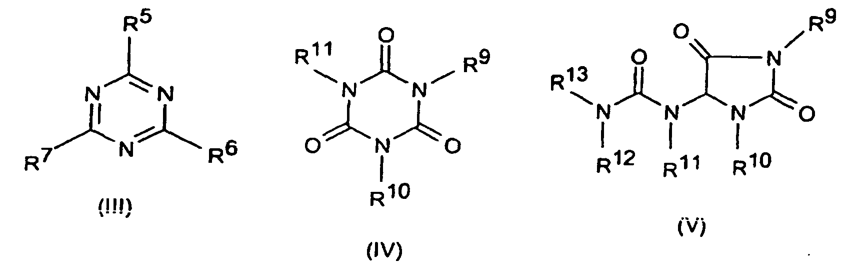 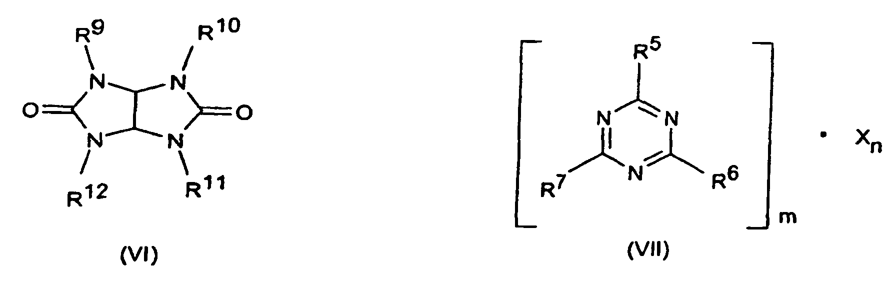 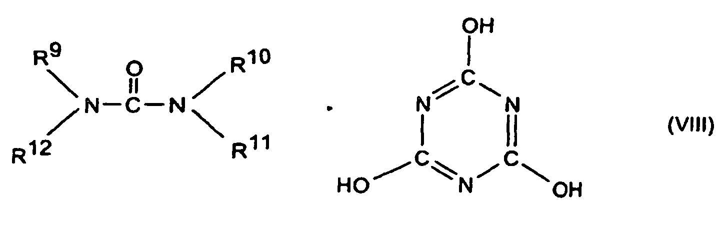 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können,
bedeuten;
oder um oligomere Ester des Tris(hydroxyethyl)isocyanurats mit aromatischen Polycarbonsäuren oder um stickstoffhaltige Phosphate der Formeln (NH₄)_{y} H_{3-y} PO₄ bzw. (NH₄ PO₃)_{z}, mit y gleich 1 bis 2 und z gleich 1 bis 10.000 handelt.

11. Flammschutzmittel-Kombination nach Anspruch 9 oder 10, **dadurch gekennzeichnet, daß** es sich bei der Komponente C um Senzoguanamin, Tris(hydroxyethyl)isocyanurat, Allantoin, Glycouril, Melamin, Melamincyanurat, Melaminphosphat, Dimelaminphosphat und/oder Melaminpyrophosphat handelt.

12. Verwendung einer Flammschutzmittel-Kombination gemäß einem oder mehreren der Ansprüche 1 bis 11 zur flammfesten Ausrüstung von thermoplastischen Polymeren.

13. Verwendung nach Anspruch 12, **dadurch gekennzeichnet, daß** es sich bei den thermoplastischen Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

14. Verwendung nach Anspruch 13, **dadurch gekennzeichnet, daß** es sich bei den thermoplastischen Polymeren um Polyamid, Polyester und ABS handelt.

15. Flammfest ausgerüstete Kunststoff-Formmasse, enthaltend eine Flammschutzmittel-Kombination gemäß einem oder mehreren der Ansprüche 1 bis 11.

16. Flammfest ausgerüstete Kunststoff-Formmasse gemäß Anspruch 15, **dadurch gekennzeichnet, daß** es sich bei dem Polymeren um Polyamid, Polyester und/oder ABS handelt.

## Claims

1. A flame retardant combination for thermoplastic polymers comprising, as component A, a phosphinate of the formula (I) and/or a diphosphinate of the formula (II) and/or polymers of these 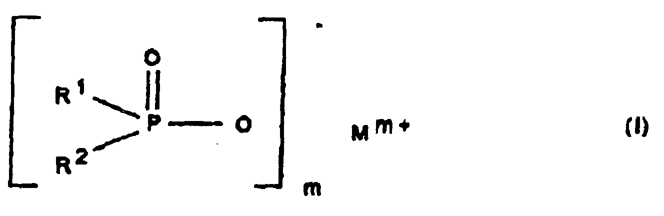 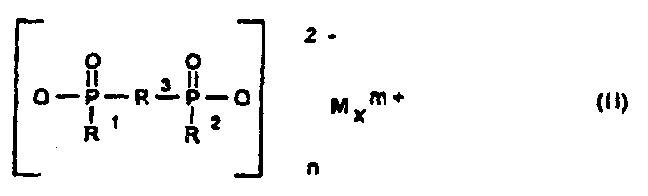 where
R ¹ and R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M are calcium ions, aluminum ions and/or zinc ions;
m is 2 or 3;
n is 1 or 3;
x is 1 or 2,
and, as component B, a synthetic inorganic compound and/or a mineral product selected from salts and esters of orthosilicic acid and condensation products thereof, silicates, zeolites and silicas, ceramic powders, zinc borate, zinc stannate, zinc hydroxystannate, zinc phosphate, zinc sulfide, zinc oxide, magnesium hydroxide, hydrotalcites, magnesium carbonate, calcium magnesium carbonate or red phosphorus, where, independently of one another, component A is used at a concentration of from 1 to 30% by weight and component B at a concentration of from 0.1 to 10% by weight, based in each case on the plastics molding composition.

2. The flame retardant combination as claimed in claim 1, wherein, independently of one another, component A is used at a concentration of from 3 to 25% by weight and component B at a concentration of from 0.3 to 7% by weight, based in each case on the plastics molding composition.

3. The flame retardant combination as claimed in claim 1 or 2, wherein R¹ and R² are identical or different and are C₁-C₆-alkyl, linear or branched, and/or phenyl.

4. The flame retardant combination as claimed in one or more of claims 1 to 3, wherein R¹ and R² are identical or different and are methyl, ethyl, n-propyl, isopropyl, n-butyl, tert-butyl, n-pentyl and/or phenyl.

5. The flame retardant combination as claimed in one or more of claims 1 to 4, wherein R³ is methylene, ethylene, n-propylene, isopropylene, n-butylene, tert-butylene, n-pentylene, n-octylene or n-dodecylene.

6. The flame retardant combination as claimed in one or more of claims 1 to 4, wherein R³ is phenylene or naphthylene.

7. The flame retardant combination as claimed in one or more of claims 1 to 4, wherein R³ is methylphenylene, ethylphenylene, tert-butylphenylene, methylnaphthylene, ethylnaphthylene or tert-butylnaphthylene.

8. The flame retardant combination as claimed in one or more of claims 1 to 4, wherein R³ is phenylmethylene, phenylethylene, phenylpropylene or phenylbutylene.

9. The flame retardant combination as claimed in one or more of claims 1 to 8, which comprises nitrogen compounds, as further component C.

10. The flame retardant combination as claimed in claim 9, wherein the nitrogen compounds have the formulae (III) to (VIII) or are mixtures of these 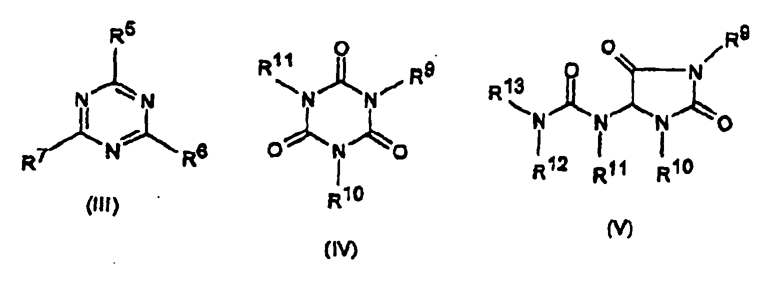 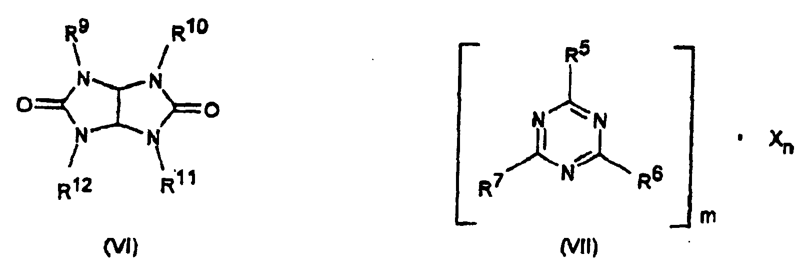 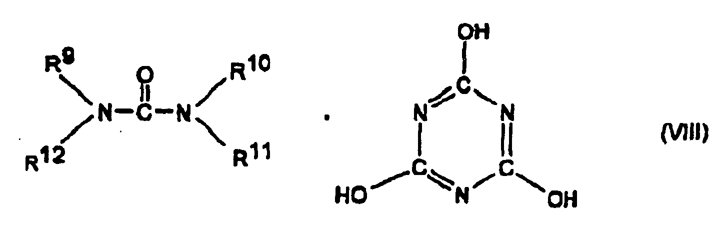 where
R⁵ to R⁷ are hydrogen, C₁-C₈-alkyl, C₅-C₁₆-cycloalkyl or -alkylcycloalkyl, unsubstituted or substituted with a hydroxyl function or with a C₁-C₄-hydroxyalkyl function, C₂-C₈-alkenyl, C₁-C₈-alkoxy, -acyl or -acyloxy, C₆-C₁₂-aryl or -arylalkyl, -OR⁸ or -N(R⁸)R⁹, or else N-alicyctic or N-aromatic systems,
R⁸ is hydrogen, C₁-C₈-alkyl, C₅-C₁₆-cycloalkyl or -alkylcycloalkyl, unsubstituted or substituted with a hydroxyl function or with a C₁-C₄-hydroxyalkyl function, C₂-C₈-alkenyl, C₁-C₈-alkoxy, -acyl or -acyloxy, or C₆-C₁₂-aryl or -arylalkyl,
R⁹ to R¹³ are groups identical with R⁸ or else -O-R⁸,
m and n, independently of one another, are 1, 2, 3 or 4,
X are acids which can form adducts with triazine compounds (III);
or the nitrogen compounds are oligomeric esters of tris(hydroxyethyl) isocyanurate with aromatic polycarboxylic acids or are nitrogen-containing phosphates of the formula (NH₄)_{y}H_{3-y}PO₄ or (NH₄PO₃)_{z}, where y is from 1 to 2 and z is from 1 to 10 000.

11. The flame retardant combination as claimed in claim 9 or 10, wherein component C is benzoguanamine, tris(hydroxyethyl) isocyanurate, allantoin, glycouril, melamine, melamine cyanurate, melamine phosphate, dimelamine phosphate and/or melamine pyrophosphate.

12. The use of a flame retardant combination as claimed in one or more of claims 1 to 11 for rendering thermoplastic polymers flame-retardant.

13. The use as claimed in claim 12, wherein the thermoplastic polymers are HI (high-impact) polystyrene, polyphenylene ethers, polyamides, polyesters, polycarbonates or blends or polymer blends of ABS (acrylonitrile-butadiene-styrene) type or PC/ABS (polycarbonate/acrylonitrile-butadiene-styrene) type.

14. The use as claimed in claim 13, wherein the thermoplastic polymers are polyamide, polyester or ABS.

15. A flame-retardant plastics molding composition comprising a flame retardant combination as claimed in one or more of claims 1 to 11.

16. The flame-retardant plastics molding composition as claimed in claim 15, wherein the polymers are polyamide, polyester and/or ABS.

## Revendications

1. Combinaison d'agents retardateurs de flamme pour des polymères thermoplastiques, qui en tant que composant A contient un sel d'acide phosphinique de formule (I) et/ou un sel d'acide diphosphinique de formule (II) et/ou des polymères de ceux-ci 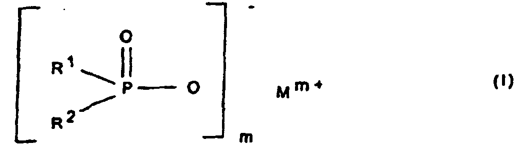 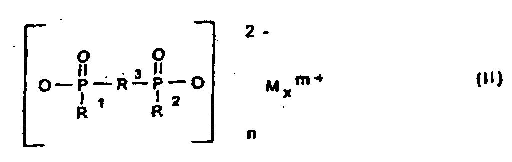 dans lesquels
R¹ et R² sont identiques ou différents et sont des groupes alkyle en C₁-C₆, à chaîne droite ou ramifiée, et/ou aryle ;
R³ est un radical alkylène en C₁-C₁₀ à chaîne droite ou ramifiée, arylène, alkylarylène ou arylalkylène en C₆-C₁₀ ;
M représente des ions calcium, aluminium et/ou zinc ;
m vaut 2 ou 3 ;
n vaut 1 ou 3 ;
x vaut 1 ou 2,
et en tant que composant B un composé inorganique synthétique et/ou un produit minéral choisi parmi les sels et esters de l'acide orthosilicique et ses produits de condensation, les silicates, les zéolites et les acides siliciques, les poudres céramiques, le borate de zinc, le stannate de zinc, l'hydroxystannate de zinc, le phosphate de zinc, le sulfure de zinc, l'oxyde de zinc, l'hydroxyde de magnésium, les hydrotalcites, le carbonate de magnésium, le carbonate de calcium et de magnésium ou le phosphore rouge, où, indépendamment l'un de l'autre, on utilise le composant A en une concentration de 1 à 30 % en poids et le composant B en une concentration de 0,1 à 10 % en poids, dans les deux cas par rapport au mélange à mouler de matière plastique.

2. Combinaison d'agents retardateurs de flamme selon la revendication 1, **caractérisée en ce que**, indépendamment l'un de l'autre, on utilise le composant A en une concentration de 3 à 25 % en poids et le composant B en une concentration de 0,3 à 7 % en poids, dans les deux cas par rapport au mélange à mouler de matière plastique.

3. Combinaison d'agents retardateurs de flamme selon la revendication 1 ou 2, **caractérisée en ce que** R¹ et R² sont identiques ou différents et représentent des groupes alkyle en C₁-C₆ à chaîne droite ou ramifiée et/ou phényle.

4. Combinaison d'agents retardateurs de flamme selon l'une ou plusieurs des revendications 1 à 3, **caractérisée en ce que** R¹ et R² sont identiques ou différents et représentent des groupes méthyle, éthyle, n-propyle, isopropyle, n-butyle, tert-butyle, n-pentyle et/ou phényle.

5. Combinaison d'agents retardateurs de flamme selon l'une ou plusieurs des revendications 1 à 4, **caractérisée en ce que** R³ est le radical méthylène, éthylène, n-propylène, isopropylène, n-butylène, tert-butylène, n-pentylène, n-octylène ou n-dodécylène.

6. Combinaison d'agents retardateurs de flamme selon l'une ou plusieurs des revendications 1 à 4, **caractérisée en ce que** R³ est le radical phénylène ou naphtylène.

7. Combinaison d'agents retardateurs de flamme selon l'une ou plusieurs des revendications 1 à 4, **caractérisée en ce que** R³ est le radical méthylphénylène, éthylphénylène, tert-butylphénylène, méthylnaphtylène, éthylnaphtylène ou tert-butylnaphtylène.

8. Combinaison d'agents retardateurs de flamme selon l'une ou plusieurs des revendications 1 à 4, **caractérisée en ce que** R³ est le radical phénylméthylène, phényléthylène, phénylpropylène ou phénylbutylène.

9. Combinaison d'agents retardateurs de flamme selon l'une ou plusieurs des revendications 1 à 8, **caractérisée en ce qu'**elle contient, en tant qu'autre composant C, des composés azotés.

10. Combinaison d'agents retardateurs de flamme selon la revendication 9, **caractérisée en ce que**, pour ce qui concerne les composés azotés, il s'agit de composés azotés ayant les formules (III) à (VIII) ou de mélange de ceux-ci 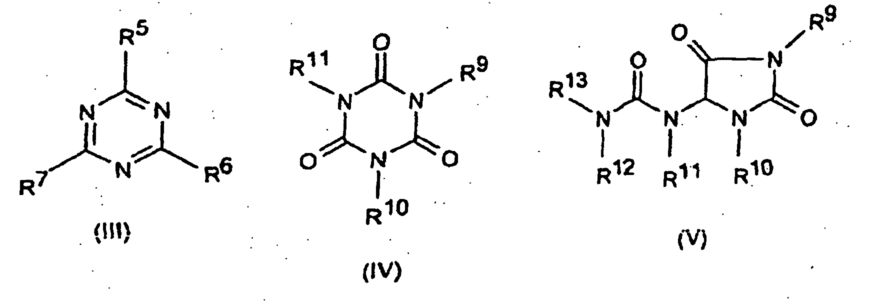 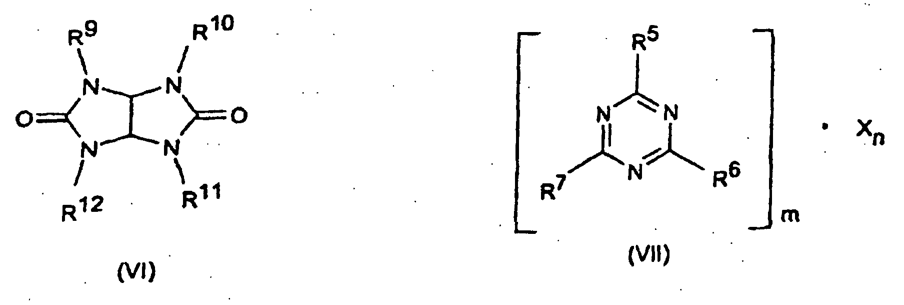 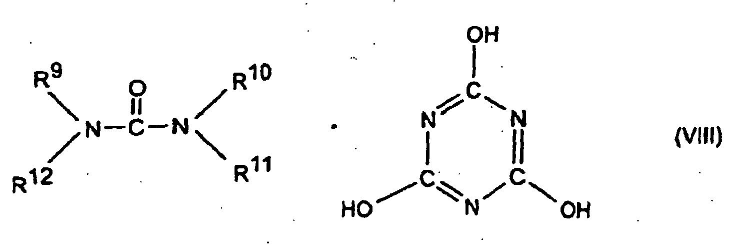 dans lesquelles
R⁵ à R⁷ sont des atomes d'hydrogène, des groupes alkyle en C₁-C₈, cycloalkyle ou alkylcycloalkyle en C₅-C₁₆ éventuellement substitués par une fonction hydroxy ou hydroxyalkyle en C₁-C₄, alcényle en C₂-C₈, alcoxy, acyle, acyloxy en C₁-C₈, aryle ou arylalkyle en C₆-C₁₂, -OR⁸ et -N(R⁸)R⁹, ainsi que des radicaux N-alicycliques ou N-aromatiques,
R⁸ est un atome d'hydrogène ou un groupe alkyle en C₁-C₈, cycloalkyle ou alkylcycloalkyle en C₅-C₁₆, éventuellement substitué par une fonction hydroxy ou hydroxyalkyle en C₁-C₄, alcényle en C₂-C₈, alcoxy, acyle, acyloxy en C₁-C₈, ou aryle ou arylalkyle en C₆-C₁₂,
R⁹ à R¹³ sont les mêmes groupes que R⁸, ainsi que -O-R⁸,
m et n représentent chacun indépendamment de l'autre 1, 2, 3 ou 4,
X représente des acides pouvant former des adduits avec les triazines (III) ;
ou encore d'esters oligomères de l'isocyanurate de tris(hydroxyéthyle) et d'acides polycarboxyliques aromatiques, ou de phosphates azotés ayant les formules (NH₄)_{y}H_{3-y}PO₄ ou (NH₄PO₃)_{z}, y valant 1 à 2 et z valant 1 à 10 000.

11. Combinaison d'agents retardateurs de flamme selon la revendication 9 ou 10, **caractérisée en ce que**, pour ce qui concerne le composant C, il s'agit de la benzoguanamine, de l'isocyanurate de tris(hydroxyéthyle), de l'allantoïne, du glycourile, de la mélamine, du cyanurate de mélamine, du phosphate de mélamine, du phosphate de dimélamine et/ou du pyrophosphate de mélamine.

12. Utilisation d'une combinaison d'agents retardateurs de flamme selon l'une ou plusieurs des revendications 1 à 11, pour conférer un finissage ininflammable à des polymères thermoplastiques.

13. Utilisation selon la revendication 12, **caractérisée en ce que**, pour ce qui concerne les polymères thermoplastiques, il s'agit de polystyrène HI (High-Impact, à grande résistance au choc), de poly(oxyde de phénylène), de polyamides, de polyesters, de polycarbonates et de mélanges, ou de mélanges de polymères du type ABS (acrylonitrile-butadiène-styrène) ou PC/ABS (polycarbonate/acrylonitrile-butadiène-styrène).

14. Utilisation selon la revendication 13, **caractérisée en ce que**, pour ce qui concerne les polymères thermoplastiques, il s'agit de polyamide, de polyester et d'ABS.

15. Mélange à mouler de matière plastique à finissage ininflammable, contenant une combinaison d'agents retardateurs de flamme selon l'une ou plusieurs des revendications 1 à 11.

16. Mélange à mouler de matière plastique à finissage ininflammable selon la revendication 15, **caractérisé en ce que**, pour ce qui concerne les polymères, il s'agit de polyamide, de polyester et/ou d'ABS.
